# EUROPEAN PATENT APPLICATION

(11) **EP 1 833 204 A1**
(43) Date of publication of application: **12.09.2007**
(21) Application number: 06004773.5
(22) Date of filing: 08.03.2006
(51) Int. Cl.: H04L 12/56, H04L 29/06, H04Q 7/38

(54) **Fast configuration of a default router for a mobile node in a mobile communication system**

(71) Applicant: MATSUSHITA ELECTRIC INDUSTRIAL CO., LTD, Kadoma-shi, Osaka 571-8501 (JP)
(72) Inventor: Velev, Genadi, 63225 Langen (DE); Kawakami, Tetsuya, 63225 Langen (DE); Schuringa, Jon, 63225 Langen (DE); Hakenberg, Rolf, 63225 Langen (DE)
(74) Representative: Grünecker, Kinkeldey, Stockmair & Schwanhäusser Anwaltssozietät

(57) **Abstract**

The invention relates to a method for fast configuring of a default router for a mobile node in a mobile communication system. A default router is used by a mobile node to transmit outgoing data to. The mobile node moves from a first to a second network area, which are respectively connected to a first and second router. In order to update the default router, after changing an attachment of the mobile node to the network, the new second router is adapted to transmit a notification to the mobile node, for changing its default router to the new router. According to the invention, the second router may also transmit a message to inform the mobile node about an expiration of the old first router. The new router may also send a message, including an indication about a new first-hop router for the outgoing data of the mobile node.

## Description

### FIELD OF THE INVENTION

The invention relates to a method for configuring a default router for a mobile node in a mobile communication system. The invention further relates to a router for exchanging data with a mobile node. The invention further relates to a mobile node for communicating with a network via a router.

### TECHNICAL BACKGROUND

A new version IPv6 of the Internet Protocol is currently being designed, though the previous Internet Protocol version 4, IPv4, provides a reliable and secure way to connect computers all over the world. The primary aim of IPv6 is to provide sufficient address space, therefore a 128-bit technology is being implemented for addressing. Furthermore, the design of a new version was seen as an opportunity to overcome some of the other shortfalls of IPv4. For instance, IPv4 was not initially designed with support for mobile users, because mobility was not an issue at the beginning of the Internet. However, in IPv6 mobility was designed into the protocol from the beginning, thereby providing a better support and integration with the underlying mechanisms.

Consequently, Mobile IPv6 includes the protocols and mechanisms used for allowing an IPv6 node to be mobile, namely to move to different networks all over the world, while maintaining upper layer connectivity. The key benefit of Mobile IPv6 is that even though the mobile node (MN) changes locations and addresses, the existing connections, through which the mobile node is communicating are maintained. In other words, MIPv6 allows a mobile node to always keep one address, a specific home address, regardless of its point of contact to the Internet, in order to maintain existing connections, while remaining reachable at any new location of the Internet.

To accomplish this, connections to mobile nodes are established with the specific home address, that is permanently assigned to the mobile node and through which the mobile node is always reachable. Furthermore, a foreign-network-dependent address is additionally assigned to the mobile node at each new location. By binding this two different addresses at an entity in the home network, called Home Agent (HA), if the mobile node is not in its home network, it is possible to route data to the mobile node via the binding entity in the home network.

Upon entering a new network area, a handover procedure is usually initiated, by which the mobile node is able to maintain existing connections. When a mobile node moves from one access router (AR), belonging to one network area to another AR, belonging to a second network area, the mobile node needs to configure a new IP address, based on the location of the new AR.

In general, when the MN performs a handover at IP layer, it also needs to change the serving AR, which is also a Default Router for the mobile node. That is, the MN needs to change the network layer and link-layer addresses of the Default Router. A default router is a router, utilized by a mobile node as the appropriate first-hop router. Almost all outgoing data from the mobile node is transmitted first to the default router. Then, the default router forwards the data, according to the destination address of the data to the corresponding next router. A default router (DR) is not utilized if the corresponding node (CN), with which the MN communicates, is on-link, meaning that the CN is located in the same network area as the MN. Therefore, no change of router would be necessary.

An IPv6 network operator may configure a corresponding on-link flag to be "0" in a router advertisement message (RA), sent by the access routers, so that the MNs would send all data packets to the DR, independent of the location of the corresponding node. In this case, the DR is the only one next-hop for the mobile node.

To select a default router for a mobile node, different information tables are utilized by the mobile node, that are a Destination Cache (DC), a Neighbor Cache (NC), a Default Router List (DRL) and a Prefix List (PL). An overview of these elements is given below:
- The *Destination Cache* stores the IP addresses of destination nodes (CN), to which data packets have been transmitted recently. The Destination Cache maps a destination IP address to the IP address of the next-hop neighbor.
- The *Neighbor Cache* stores on-link unicast IP addresses (of nodes connected to a link local network, i.e., on-link nodes) and contains information, like for example as their link-layer addresses and a flag indicating whether the neighbor is a router or a host (called IsRouter).
- The *prefix list* stores prefixes, that define a set of addresses that are on-link. Prefix List entries are created from information received in Router Advertisements messages. Each entry has an associated invalidation timer value, which isextracted from the router advertisement message, used to expire prefixes, when they become invalid.
- The *Default Router list* contains routers to which packets may be sent. Router list entries point to entries in the Neighbor Cache; the algorithm for selecting a default router favors routers known to be reachable over those whose reachability is suspect. Each entry also has an associated invalidation timer value, extracted from Router Advertisements messages, used to delete entries, that are no longer advertised.

When sending a packet to a destination, a mobile node uses a combination of the Destination Cache, the Prefix List and the Default Router list to determine the IP address of the appropriate next hop, an operation known as "next-hop determination". Once the IP address of the next hop is known, the Neighbor Cache is consulted for link-layer information about that neighbour. Whenever a MN receives a RA from a new router, the MN makes a new entry in the Neighbor Cache, Default Router list and prefix list.

As mentioned above, after a change of access router of a mobile node, the mobile node must change its default router, being the router to which outgoing data from the mobile node is to be transmitted. However, it may take a time for the mobile node to realize that the access router to which it is connected has changed. Furthermore, usually the entry of the current DR is not changed until it is proved to be unreachable.

When the previous router is doubt to be reachable by the mobile node, the MN may start a Neighbor Unreachability Detection (NUD) procedure. Thereby a failure of reachability of a neighbour may be detected or the failure of the forward path from the mobile node to the neighbour. NUD requires positive confirmation that packets sent to a neighbour are actually reaching that neighbour and being processed properly by its IP layer. The mobile node performing NUD may send neighbor solicitation messages (NS) to the cached link-layer address of the routers and a later receipt of a *solicited* neighbor advertisement message (NA) indicates that the forward path is working. Receipt of an *unsolicited* NA suggests that a neighbour has urgent information to announce e.g., a changed link-layer address, and therefore, is not accepted as confirmation of the previously sent NS. The mobile node determines that a neighbour is unreachable after sending 3 NS in consequence and not receiving a solicited NA. Then a new default router may be selected. In such case, the MN selects the next entry from the Default Router list.

Hence, the mobile node will not update its default router until the NUD is completed.

In a scenario of handover between the old and new AR belonging to different IP links, the RA message by the new AR would have different prefixes than the one from the old AR. In such case the MN determines an IP link change, because the set of IP prefixes from the new and old AR are different.

In a further scenario of handover, the old and new ARs belong to a same network-based localized mobility management (NETLMM) domain, in which the ARs of the domain advertise the same set of IP prefixes, so that the MN can keep using the IP addresses that have been configured at the old AR. In this scenario the RA messages sent by the new and old ARs announce the same set of IP prefixes. Therefore, the MN may not determine an IP link change and would not start the NUD for the DR entry. In this case, it would take the MN even a longer time to realize that the current DR is not longer reachable.

The resulting problem for the mobile nodes, that change their access routers during a handover is that the uplink communication from the mobile node to the corresponding node might be interrupted, as the unreachable "old" default router is further utilized as the router to which outgoing data from the MN is transmitted.

In light of the above mentioned problems, one object of the invention is to provide a method for a seamless communication between a mobile node and a corresponding node, during a handover between different routers.

A further object of the invention is to minimize a delay for updating the next-hoprouter for a mobile node, during a handover between different routers.

### SUMMARY OF THE INVENTION

The object is solved by the subject matter of the independent claims. Advantageous embodiments of the invention are subject-matters of the dependent claims.

One aspect of the invention is to enable the mobile node to faster change its default router during a handover. This is achieved by transmitting from the new router messages, including indications for the mobile node to change the default router or the appropriate first-hop router. It is also possible to notify the default router about the lapse of the old router. Thereby the mobile node changes its default router and can transmit outgoing data to the proper router, being the new and reachable router.

According to an embodiment of the invention a method for configuring a default router for a mobile node is provided. The default router is a router to which outgoing data from the mobile node is to be transmitted and the mobile node moves from a first network area to a second network area in a mobile communication system. A first router is connected to the first network area and a second router is connected to the second network area. Upon changing an attachment of the mobile node from the first network area to the second network area, the mobile node is located in the second network area and the first router remains the default router for the mobile node. The configuration comprises sending, upon the attachment of the mobile node to the second network area, from the mobile node a neighbor solicitation message (NS), destined to the first router. The neighbor solicitation message comprises address information of the first router and address information of the mobile node and is received in the second router. Furthermore, a first router advertisement message is transmitted from the second router to the mobile node, comprising address information of the second router. In addition, a second router advertisement message is transmitted to the mobile node from the second router, comprising address information of the first router and information on an expiration of the first router. After receiving in the mobile node the first and second router advertisement messages from the second router, the mobile node configures the second router, instead of the first router as the default router for the mobile node.

This method enables a mobile node to configure the first-hop router in a fast way. No packet loss occurs, because the mobile node is notified about the unreachable old router and accordingly chooses or is forced to choose a proper and reachable new router.

In an advantageous embodiment of the invention the information in the second router advertisement message on the expiration of the first router is a lifetime parameter for the first router. Preferably, said lifetime parameter may be set by the second router to zero. One possible advantage is that only one parameter has to be set, thereby providing a very space-saving approach, in which no further payload bits are necessary.

According to a further embodiment, in the second router it is determined whether the mobile node is new in the second network area by utilizing the address information of the mobile node in the neighbor solicitation message. The address information of the mobile node is utilized as a IP source address of the neighbor solicitation message. The second router may further determine the default router for the mobile node by utilizing the address information of the first router in the neighbor solicitation message. Preferably, the address information of the first router is utilized as a target address of the neighbor solicitation message. An advantage may be that the second router is effectively provided with the necessary information. No additional signalling is necessary.

According to the invention, a router for exchanging data with a mobile node is provided. The router is connected to a first network area and the mobile node moves from a second network area to the first network area in a mobile communication system. A second router is connected to the second network area and the mobile node is located in the first network area. The router comprises a receiver adapted to receive a first neighbor solicitation message, destined to the second router. The neighbor solicitation message comprises address information of the second router and of the mobile node. A processor is adapted to process the first neighbor solicitation message and further adapted to generate a first router advertisement message in response to the first neighbor solicitation message, comprising address information of the router. The processor is further adapted to generate a second router advertisement message in response to the first neighbor solicitation message. The second router advertisement message includes address information of the second router and information on an expiration of the second router. A transmitter is adapted to transmit the first and the second router advertisement message to the mobile node. Such a router is able to inform a mobile node to change its default router, though the mobile node may not be aware yet of the unreachable old router.

According to the invention, a mobile node for communicating with a network via a router is provided. The mobile node is attached to a first network area, connected to a first router. An attachment of the mobile node within the network changes. The mobile node comprises a processor, adapted to detect the change of attachment of the mobile node. The processor is further adapted to generate, upon the detection of the change of attachment, at least one neighbor solicitation message, destined to the first router. The neighbor solicitation message comprises address information of the first router and address information of the mobile node. A transmitter is adapted to transmit the at least one neighbor solicitation message, destined to the first router. The mobile node is thereby enabled to send a message to the default router, every time a change of attachment occurs.

According to another embodiment of the invention, a method for configuring a default router for a mobile node is provided. The default router is a router to which outgoing data from the mobile node is to be transmitted. The mobile node moves from a first network area to a second network area in a mobile communication system. A first router is connected to the first network area and a second router is connected to the second network area. Upon changing the attachment of the mobile node from the first network area to the second network area, the mobile node is located in the second network area and the first router is the default router for the mobile node. Upon the attachment of the mobile node to the second network area, the mobile node send a neighbor solicitation message, destined to the first router, comprising address information of the first router and address information of the mobile node. Accordingly, the second router receives the neighbor solicitation message from the mobile node and transmits a redirect message from the second router to the mobile node. The redirect message comprises address information of the second router and an indication for the mobile node to utilize the second router as the router to which outgoing data from the mobile node is to be transmitted. Upon reception of the redirect message in the mobile node, the mobile node transmits outgoing data to the second router instead of to the first router, though the first router is configured as the default router.

According to an advantageous embodiment, the second router transmits, upon receiving in the second router the neighbor solicitation message from the mobile node, a router advertisement message to the mobile node, comprising address information of the second router. Thereby, the mobile node may update its internal databases about reachable routers.

According to one embodiment of the invention, a router for exchanging data with a mobile node is provided. The router is connected to a first network area and the mobile node moves from a second network area to the first network area in a mobile communication system. A second router is connected to the second network area and the mobile node is located in the first network area. The router comprises a receiver, adapted to receive a first neighbor solicitation message, destined to the second router, comprising address information of the second router and of the mobile node. A processor is adapted to process the first neighbor solicitation message and further adapted to generate a redirect message in response to the first neighbor solicitation message. The redirect message comprises address information of the router and an indication for the mobile node to utilize the router for transmitting outgoing data from the mobile node to. Furthermore, a transmitter is adapted to transmit the redirect message to the mobile node.

According to the invention, a method for configuring a default router for a mobile node is provided. The default router is a router to which outgoing data from the mobile node is to be transmitted. The mobile node moves from a first network area to a second network area in a mobile communication system. A first router is connected to the first network area and a second router is connected to the second network area. Upon changing the attachment of the mobile node from the first network area to the second network area, the mobile node is located in the second network area. The first router is the default router for the mobile node. Upon the attachment of the mobile node to the second network area, the mobile node transmits a router solicitation message, comprising address information of the mobile node. The second router receives the router solicitation message from the mobile node and transmits a router advertisement message to the mobile node. The router advertisement message comprises address information of the second router and an indication for the mobile node to utilize the second router as the default router. Upon reception of the router advertisement message in the mobile node, the mobile node configures the second router, instead of the first router, as the default router for the mobile node.

According to an advantageous embodiment of the invention, the indication for the mobile node in the router advertisement message to utilize the second router as the default router, is a flag. A flag may be implemented as one bit in a preconfigured reserved field of the message. Therefore, the implementation is very easy.

According to the invention, a router for exchanging data with a mobile node is provided. The router is connected to a first network area and the mobile node moves from a second network area to the first network area in a mobile communication system. A second router is connected to the second network area and the mobile node is located in the first network area. The router comprises a receiver, adapted to receive a router solicitation message, comprising address information of the mobile node. A processor is adapted to process the router solicitation message and is further adapted to generate a router advertisement message in response to the router solicitation message. The generated router advertisement message comprises address information of the router and an indication for the mobile node to utilize the router as a default router. Additionally, a transmitter is adapted to transmit the router advertisement message to the mobile node.

According to the invention, a mobile node for communicating with a network via a router is provided. The mobile node is attached to a first network area, connected to a first router and an attachment of the mobile node within the network changes. The mobile node comprises a processor, adapted to detect the change of attachment of the mobile node. The processor is further adapted to generate, upon the detection of the change of attachment, a router solicitation message, comprising address information of the mobile node. A transmitter is adapted to transmit the router solicitation message and a receiver is adapted to receive a router advertisement message from the second router, comprising address information of the second router and an indication to utilize the second router as a default router for the mobile node. The processor is further adapted to process the indication to utilize the second router as the default router for the mobile node. Furthermore, the processor is adapted to configure the second router as the default router for the mobile node.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows a mobile communication system according to one embodiment of the invention,
- **Fig. 2**: shows a signaling procedure according to one embodiment of the invention,
- **Fig. 3**: shows a packet format of a Neighbor Solicitation message according to the invention,
- **Fig. 4**: shows a packet format of a Router Advertisement message according to the invention,
- **Fig. 5**: shows a signaling procedure according to a further embodiment of the invention,
- **Fig. 6**: shows a packet format of an ICMP redirect message according to the invention,
- **Fig. 7**: shows a signaling procedure according to another embodiment of the invention,
- **Fig. 8**: shows a signaling procedure according to one combination of the previous embodiments, and
- **Fig. 9**: shows a steps-chart for a handover procedure.

### DETAILED DESCRIPTION OF THE INVENTION

The following paragraphs will describe various embodiments of the invention. For exemplary purposes only, most of the embodiments are outlined in relation to an IPv6 communication system and the terminology used in the subsequent sections mainly relates to the IPv6 terminology. However, the terminology and the description of the embodiments with respect to an IPv6 architecture is not intended to limit the principles and ideas of the inventions to such systems.

Also the detailed explanations given in the Technical Background section above are merely intended to better understand the mostly IPv6 specific exemplary embodiments described in the following and should not be understood as limiting the invention to the described specific implementations of processes and functions in the mobile communication network.

According to the invention, a neighbor solicitation (NS) message may be defined as a message sent by a node to perform mainly two actions. The first action may be to determine the link-layer address of a neighbour. The second action may be to verify that a neighbour is still reachable via a cached link-layer address.

According to the invention, a router solicitation (RS) message may be defined as a message sent by hosts to routers in order to request routers to generate Router Advertisements messages immediately, rather than at their next scheduled time.

According to the invention, a router advertisement (RA) message may be defined as a message sent by routers to advertise their presence. This may be done together with various link and Internet parameters. RA messages are sent either periodically or in response to a Router Solicitation message. RAs may further contain prefixes, that are used for on-link determination and/or address configuration.

According to the invention, a redirect message may be defined as a message sent by routers to inform hosts of a better first-hop node to reach a particular destination.

According to the invention, an attachment of the mobile node to a network may be defined as the connection between a mobile node and its first-hop link-layer entity. Generally the first-hop link-layer entity, for example a base station is different from the first-hop network layer entity, for example an access router, and furthermore, multiple link layer entities may be connected to one network layer entity.

According to the invention, an expiration of a router may be defined as the lapse of a life time of a router.

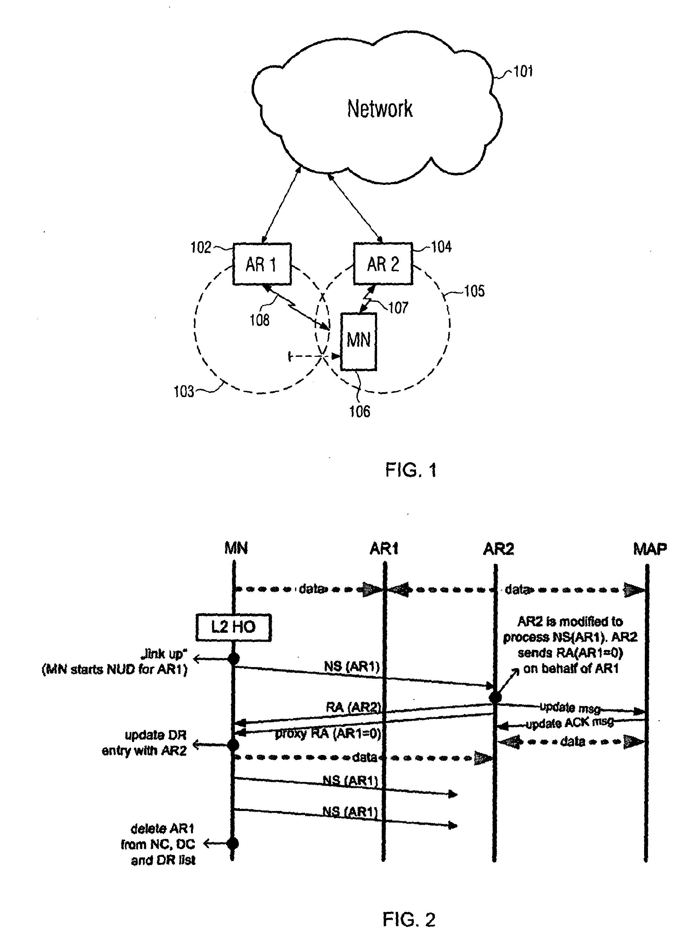

Fig. 1 shows a mobile communication system according to one embodiment of the invention. A mobile node (MN) 106 is located in a second network area 105, which is connected to a router AR2 104. The mobile node was previously located in a first network area 103, connected to another router AR1 102. The mobile node 106 exchanges data with the router connected to the current network area.

A connection 107 between the second router AR2 104 and the mobile node 106 allows the exchange of data between these two entities. The first router 102 is not reachable any more for the mobile node 106, because the MN 106 is no longer located in the first network area 103, but in another network area 105. Hence, the connection 108 from the first router AR1 102 is no longer available for exchanging data with the MN 106. Therefore, if a MN 106 is not aware that the router has changed, it still transmits data to the router AR1 102, though the first router AR1 is not reachable. Consequently, this may lead to data packet loss.

The mobile node must be informed about the change of router immediately after the change occurs, otherwise packet loss may not be prevented due to the temporary use of the previous router. Accordingly, the mobile node must change the default router it uses for transmitting the outgoing data.

When a mobile node changes its access router, a lot of signaling and processing is necessary to establish a new connection. Fig. 9 shows a time scheme for a handover procedure for standard Mobile Ipv6 comprising many steps. First, the MN needs to detect a new layer 2 (L2) link. Then it can execute the layer 2 handover. After that, it needs to detect the layer 3 (L3) link change, which corresponds to the new access router, e.g. router AR2 104. In the next step, it has to discover the new layer 3 (L3) prefix of the new router and the new Access Router (AR) address. Subsequently, it must obtain a new CoA, and possibly conduct a Duplicate Address Detection (DAD) procedure. Then it must send a Binding Update message to HA and possibly to the CN, before IP packets can finally be delivered to the MN at the new location.

In standard Mobile IPv6, a layer 3 link change is detected by the mobile node, e.g., when a certain number of Router Advertisement (RA) messages are not received, which are usually sent periodically. A timer can be used to check this condition. Furthermore, the DAD procedure is also based on a timer and requires the node to send a Neighbor Solicitation (NS) message containing the tentative address and waiting for a response from a node with the same address. Apparently, a Mobile IP handover procedure may take a very long time, which can render the use of delay-sensitive communication applications impossible.

After the layer 3 change detection by the mobile node, usually the default router for the mobile node has to be changed to the new serving access router, which in case of Fig. 1, is the second router AR2 104. The change of default router enables the mobile node to send data packets to the reachable new router, instead of to the unreachable previous router.

Fig. 2 shows a signaling procedure according to one embodiment, which enables a mobile node to change its default router.

In order to accelerate the handover procedure, this invention assumes that the link-layer in the MN generates a "layer 2 link-up" event after a link-layer handover has been completed. The "link-up" event may be used to trigger the MN to start the Neighbor Unreachability Detection (NUD) for the current DR. This comprises that the MN generates and sends a Neighbor Solicitation (NS) message for the old AR, in this case AR1. However, according to the invention it might also be possible to send a NS message without triggering the NUD procedure. Furthermore, it is also possible to transmit a similar message to the Neighbor Solicitation message, including address information of the first router AR1 and of the mobile node MN.

The NS message may be sent via unicast, wherein the message format of the NS message is depicted in Fig. 3.

The link-layer destination address (L2-DA) in the L2 header is the AR1's unicast link-layer address, which may be the MAC-address of the router, according to a usual implementation in IPv6. The IP destination address (IP-DA) of the NS message in the L3-header is the AR1's link-local address. The IP source address (IP-SA) of the NS message in the L3-header is the MN's link-local address.

It may also be required that the MN includes its link-layer address, in the "Source Link-Layer Address" option, which for a specific implementation might be the MN-MAC. The presence of this option allows the AR2 to include the MN in its Neighbor Cache, which allows the new router AR2 to forward incoming packets, destined to the IP address of the mobile node, to the link-layer address of the mobile node. However, this advantageous embodiment is not essential for the functioning of the invention. The link-layer address of the mobile node can also be included in a different field of the NS message.

The link-layer interface of the new AR, in this case AR2, may further be configured in a promiscuous mode, i.e. to accept link-layer messages that are not destined to its link-layer address or to a multicast address.

However, in order to limit the processing of the packets at the higher layers, e.g. at the IP layer, the new AR can implement a filtering function, only passing packets through, which has been destined to a predefined list of routers. These routers could be the neighbouring ARs of the new router, from which MNs may move to a new router. The list of neighbouring ARs may be manually configured by a network operator. This consideration is advantageous, however not essential for the functioning of the invention.

The AR2's IP layer receives the NS message from the mobile node, which was destined to the current default router AR1 of the mobile node. The AR2 recognizes from the IP source address of the received NS message that the MN is a new one for the network area of AR2. Furthermore, the AR2 is able to determine from the IP destination address that the MN's previous AR is AR1. The new router AR2 is modified to send as soon as possible a solicited router advertisement message (RA) to the MN, in response to the received NS message. This router advertisement message is denoted by RA(AR2) in Fig. 2, because it is a RA message containing the source IP address of AR2.

In Fig. 4 a router advertisement message is depicted. The RA message comprises several fields, for example a router lifetime parameter and several reserved bits for optional parameters, which in this case are the flags M,O and a newly introduced flag D.

When the MN receives the RA message RA(AR2), it updates the Neighbor Cache and Default Router list for the mobile node with the information of AR2, including address information of the second router AR2.

A very short time after sending the first RA message with the IP source address of the second router AR2, the router AR2 is further modified to generate and send a unicast proxy RA (AR1) to the MN having the IP source address of the first router AR1. Furthermore, the "Router Lifetime" field, that is related to the router identified by the IP source address in the second RA message is set to "0". This indication, when processed by a mobile node tells the mobile node, that the router corresponding to the link-local address of the IP source address field of the RA message expires and is no longer valid for the mobile node. Usually, said second RA message should be sent by the first router AR1. However, as the mobile node is no longer reachable for the first router AR1, the AR2 generates and sends said second RA message on behalf of AR1. Accordingly, this RA is called a proxy RA message.

When the MN receives the second RA message RA(AR1=0) with "Router Lifetime" set to 0 for the first router, it ceases using AR1 as DR. The entry for AR1 in the DRL is however not deleted yet. Usually, upon an expiring of a router, in this case indicated by the Lifetime Value set to "0", the Neighbor Unreachability Detection, is initiated to confirm the expiration and invalidation of the router.

From the Default Router List another router is selected as DR. Since there may be only the entry of AR2, the MN chooses AR2 as DR, and thus, it starts using the proper DR, namely the new router AR2.

In case that more entries are available in the Default Router List, usually the router, from which an Advertisement message was received the latest is selected. Because of the first RA message RA(AR2), comprising address information of the second router, which was sent to the mobile node shortly before the second RA, the proper DR, AR2 is selected.

Furthermore, it may be necessary for the new router AR2 to notify a Mobility Anchor Point (MAP) (not shown) about this change of attachment from the first router to the second router. In this respect, an update message may be sent to the MAP, including information on the mobile node and on the new router AR2. This enables the MAP to internally bind the mobile node to the new access router AR2 and thereby appropriately route corresponding incoming and outgoing data of the mobile node. The binding may then be acknowledged by the MAP, by returning an update ACK message to the new router AR2, in response to the received update message from AR2.

In a preferred embodiment of the invention, the mobile node continues to perform NUD procedure, which includes further sending two additional NS messages destined for AR1. Correspondingly, after receiving the second RA message the mobile node transmits the remaining two NS messages and waits for a proper response from its previous default router. However, as no solicited response is received in the mobile node, the NUD is completed and the MN determines, that its previous default router, AR1 is not reachable and deletes the AR1 entries in the NC, DC and DRL.

In case the mobile node continues to send NS messages destined to its former default router, it is further important that a router, in this case AR2, that receives the NS messages only processes the respectively fist message, containing address information of the mobile node and of the first router, AR1. If further NS messages are received in the new router AR2, which are directed to the same router and to the same mobile node, the AR2 should ignore these further NS messages and drop them. Consequently, only the first message is properly processed by a router, thereby transmitting two RA messages and advantageously updating the binding in a MAP.

Fig. 5 shows a signaling procedure according to a further embodiment of the invention. The signaling at the beginning is similar to the signaling of the first embodiment, depicted in Fig. 2. Therefore, only a brief summary will be given. More detailed information is available in the corresponding paragraphs for Fig. 2.

After a link-up event in the mobile node occurs, the MN generates and sends a Neighbor Solicitation (NS) message NS(AR1) for the old AR, in this case AR1, preferably within an NUD procedure. The NS message includes the AR1's unicast link-layer address and the AR1's link-local address

The link-layer destination address (L2-DA) in the L2 header is the AR1's unicast link-layer address, which may be the MAC-address of the router, according to a usual implementation in IPv6. The IP destination address (IP-DA) of the NS message in the L3-header is the AR1's link-local address. The IP source address (IP-SA) of the NS message in the L3-header is the MN's link-local address.

Accordingly, the second router AR2 receives the NS message from the mobile node, which was destined to the current default router AR1 of the mobile node. The AR2 compares the received address information of the mobile node with an internal database, wherein the database may comprise information on each mobile node with which the access router is exchanging data. This internal database might be for example, a Destination Cache or a Neighbor Cache of the router. Upon matching the MN's address information with the database, the AR2 determines whether the mobile node is new in its routing area, if no match is found or if the mobile node is matched in the database, hence not new in the range of the new router AR2.

Furthermore, the AR2 is able to determine from the IP destination address that the MN's previous AR is AR1. Similar to the previous described embodiment, the new router AR2 sends a router advertisement message RA to the MN, in response to the received NS message. Preferably, at this point the AR2 may update the bindings of the mobile node within the MAP, connected to the AR2.

Consequently, upon receiving the RA message, the MN processes the message and may update the Neighbor Cache and Default Router list for the mobile node. The received information is appropriately inserted into the NC and DRL.

Alternatively to the first described embodiment of Fig. 2, in which a second RA message, including an unreachability indication, is transmitted, the AR2 sends in this case upon a very short time after sending the first RA message, a redirect message to the mobile node. This redirect message mainly includes an indication for the mobile node to utilize the second router as the first-hop router.

Preferably, this might be conducted by utilizing an ICMP redirect message. The ICMP redirect message used in this advantageous embodiment of the invention is shown in Fig. 6.

An ICMP redirect message is usually utilized by routers to inform a host, in this case a mobile node, of a better first-hop node or router on the path to a destination. Accordingly, the source IP address should be the old AR1's link-local address, in order that the MN validates the message. The address in the target field of the ICMP packet body denotes the address, which shall be used as the better first-hop compared to the router characterized by the address put in the destination field of the ICMP redirect message.

In the ICMP redirect message, sent from the second router AR2 to the mobile node, the target address must be the link-local addresses of the AR2 and the destination address must be the link-local address of the AR1. Furthermore, the option "target link-layer address" should include the link-layer address of AR2.

After receiving the redirect message, shown in Fig. 5, the MN processes the indication and updates its Destination Cache accordingly, so that outgoing traffic, which has to be sent to AR1, is redirected to AR2. Thus, the outgoing, uplink packets are sent to the AR2 and packet loss is avoided, before a usual NUD procedure for AR1 is completed by the mobile node. However, AR1 continues to be the DR, though the default router is no longer used as the first-hop router for the outgoing data traffic from the mobile node.

Similar to the embodiment illustrated in Fig. 2, the mobile node may continue to send NS messages to the new access router AR2, advantageously being part of a NUD signaling. After completing the NUD, the MN may update its NC, DC and DRL by deleting the confirmed unreachable first router AR1. Furthermore, a new entry in the DRL is selected for the default router, thereby choosing the most recent entry of AR2.

Fig. 7 shows a signaling procedure according to a yet further embodiment of the invention.

In this alternative procedure for configuring a default router, the mobile node transmits a Router Solicitation (RS) message, upon detecting a change of attachment. This RS message may be multicasted to all routers on the IP link. In this alternative the Layer 2 "link-up" event triggers the transmission of said RS message, including address information of the mobile node. It is possible to transmit a similar message to the Router Solicitation message, however the similar message should also include address information of the mobile node MN. The address information of the mobile node, may be included in the RS message by utilizing a IP address of the mobile node as the IP source address of the RS message.

Similar to the previous embodiments, upon receiving the RS message in the second router, the second router AR2 is able to determine if the mobile node is new in its area. This may be achieved by utilizing the address information of the mobile node and comparing it with an internal database, for example a DC or a NC of the router.

If the MN is confirmed to be new in the range of AR2 it is also preferable to inform a MAP, connected to the AR2 about this change of access router for the mobile node. Similar to the previous embodiments, this may include an update message transmitted to the MAP, wherein the MAP is indicated to change the binding between the mobile node and the old AR1 and to establish an updated binding of the mobile node with the new access router AR2. Upon successfully updating the binding, the MAP sends an update acknowledgment to the new router AR2.

Furthermore, if the new access router AR2 determines that the MN is new, the AR2 may decide that the MN needs to update its Neighbor Cache and Default Router entry. In order to minimize the signaling exchange between MN and AR2 and to accelerate the MN update, the AR2 informs the MN to correspondingly change its Neighbor Cache and Default Router entry. In this respect, the AR2 generates a Router Advertisement (RA) message, that comprises an indication for the mobile node to utilize the source router of the RA message as the default router for the mobile node.

In a specific implementation, this may be conducted by defining a new flag. Said flag, which may be called for example D-flag, utilizes one of the reserved bits from the "reserved" field in a usual RA, depicted in Fig. 4. When flag D in a RA is set to "1", a node changes its DR to the advertising router of the RA message. When flag D is set to "0", a node does not perform any changes to the DR entry.

Preferably, when the flag D is set to "1 ", so as to force a mobile node to utilize the advertised router as the default router, the message should be transmitted in a unicast solicited way. Otherwise, all MN receiving this message would change their default routers.

Accordingly, after the new router AR2 receives the RS message from the MN and determines that this MN needs to change its DR entry, AR2 sends a RA message with flag D set to "1". Upon receiving the RA message, including said indication to change the default router, the MN must change its DR entry to the new router AR2. Consequently, the MN transmits all outgoing data to the reachable, new access router AR2 instead of the unreachable, old access router AR1.

However, the MN still keeps AR1 in its Neighbor Cache, Destination Cache and Default Router list. After some time, which may be when a lifetime of the old router AR1 expires, the MN may start performing NUD for AR1. As mentioned above, this may include transmitting three NS messages to AR1 and waiting for a solicited NA response. As no such response will be received, the MN will confirm the expiration of the old router and hence will delete the entries from the NC, DC and DRL.

If a mobile node is unable to recognize flag D, then it is preferable that it does not take any actions in this respect.

It is further possible to combine the above mentioned procedures of the previous embodiments, illustrated in Figs. 2 and 5. In such combinations, the AR is always modified with the changes presented in both approaches, namely the AR should be able to send modified RA messages using flag D and should also be able to receive unicast NS for other routers in order to generate either a RA message with AR1's lifetime parameter set to "0" or a redirect message, including an indication to utilize a different router as the firs-hop router.

A first combination is not illustrated with a figure, however it will be briefly discussed. In order to send from the second router, a RA message with the lifetime of AR1 set to "0" or a redirect message, it is necessary that the AR2 is provided with information about AR1. In the above described embodiments this is the case when the second router receives a NS message from the mobile node. A NS message, according to the invention includes address information of the mobile node and of the current default router, which is in this case the old access router AR1.

Therefore, the assumption for the first combination is that the first message received by the AR2 is a NS for the old AR1, transmitted by the mobile node, that has changed its attachment. AR2 may send a RA message, modified according to the embodiment illustrated in Fig. 7, for example a RA using a flag D set to "1". Since AR2 does not know if the receiver, in this case the mobile node is modified to process the flag D in the RA message, AR2 will process further. AR2 may send either a RA message with an indication of the unreachability of the old router AR1, for example implemented as a lifetime parameter of the old router AR1 set to "0", or may send a redirect message, comprising an indication for the mobile node to utilize the second router to transmit the data packets to. If the MN is capable of processing flag D in the first RA message, then it would update its DR entry after receiving the RA message with said indication, for example the D-flag configured to "1". Otherwise it will update the DR entry after receiving one of the both messages, the RA message with AR1's lifetime set to "0" or the redirect message, including the indication to change the first-hop router. Therefore, this approach differs from the embodiments illustrated in Fig. 2 and 5, in that the first router advertisement message further includes said indications to utilize the second router as the default router.

However, a combination of embodiments is also possible, if the first received message is a RS message from the mobile node, including only information from the mobile node, but not about the old access router AR1. Nevertheless, it is still necessary that the new router possesses information about the old access router of a the mobile node.

In this respect, a possible combination is illustrated in Fig. 8, wherein a signaling procedure of a combined embodiment is presented.

At first, upon receiving the RS message from the mobile node, the AR2 may send a modified RA using flag D set to "1" to the mobile node, according to a previously discussed approach. In Fig. 8 it is assumed that the mobile node is not modified to recognize flag D in the RA message. In this case, the MN would not update its DR entry after receiving the modified RA message from the new access router.

It is nevertheless possible for the access router to send one of the messages RA with the lapse indication of the old router or the redirect message, including the substitute indication for the old and new router. However, as already mentioned, the AR2 must still be provided with information about the old AR, in this case AR1. One of the possibilities for the new router AR2 to get the necessary information is to transmit a request for binding information to the MAP, which is connected to the router AR2. Upon the request for binding information on the recently attached new mobile node to a previous router, the MAP consults a constantly updated database, which includes information on assignments between mobile nodes and their default routers. Accordingly, the MAP would inform the AR about the requested binding information.

One further possibility is that the AR2 has pre-configured information about MN's previous AR. The AR2 may be configured by a network operator to know about MNs registered at neighbor areas, by establishing a neighboring mobile node list, that comprises information on mobile nodes, registered to neighbouring routers of the new second router AR2. AR2 can then look up the AR1 and can send one of both messages, the RA message with AR1's lifetime set to "0" or the redirect message, including the indication to use the second router as the first-hop router.

A yet different approach is depicted in Fig. 8, in which it is shown that MN sends a NS message NS(AR1) immediately after receiving a modified RA message from AR2. So, in a later point of time the AR2 receives a NS message NS(AR1) for AR1 from a MN, to which already a modified RA with flag D has been sent. Therefore AR2 will now be enabled to send one of both messages, RA with AR1's lifetime set to "0" or a redirect message, forcing a new first-hop for the mobile node. Hence, the MN would update its DR entry faster, since the MN would not wait until a NUD procedure completes.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the present invention may also be implemented by means of software modules which are executed by a processor or directly in hardware. Also a combination of software modules and a hardware implementation may be possible. The software modules or instructions may be stored on any kind of computer readable storage media, for example RAM, EPROM, EEPROM, flash memory, registers, hard disks, CD-ROM, DVD, etc.

## Claims

1. A method for configuring a default router for a mobile node (106), the default router being a router to which outgoing data from the mobile node is to be transmitted, the mobile node moving from a first network area (103) to a second network area (105) in a mobile communication system, a first router (102) being connected to the first network area and a second router (104) being connected to the second network area, wherein upon changing an attachment of the mobile node from the first network area to the second network area, the mobile node is located in the second network area, and wherein the first router is the default router for the mobile node, the method comprises the steps of:
upon the attachment of the mobile node to the second network area, sending from the mobile node a neighbor solicitation message, destined to the first router, comprising address information of the first router and address information of the mobile node,
receiving in the second router the neighbor solicitation message from the mobile node and transmitting from the second router a first router advertisement message to the mobile node, comprising address information of the second router,
transmitting from the second router a second router advertisement message to the mobile node, comprising address information of the first router and information on an expiration of the first router, and
after receiving in the mobile node the first and second router advertisement messages from the second router, configuring in the mobile node the second router, instead of the first router as the default router for the mobile node.

2. The method of claim 1, wherein the information in the second router advertisement message on the expiration of the first router is a lifetime parameter for the first router, said lifetime parameter being set by the second router to zero.

3. The method of one of claims 1-2, further comprising the steps of:
upon reception in the second router of the neighbor solicitation message from the mobile node,
determining, in the second router, that the mobile node is new in the second network area by utilizing the address information of the mobile node in the neighbor solicitation message, wherein the address information of the mobile node is utilized as a IP source address (IP SA) of the neighbor solicitation message, and
determining, by the second router, the default router for the mobile node by utilizing the address information of the first router in the neighbor solicitation message, wherein the address information of the first router is utilized as a target address (target) of the neighbor solicitation message.

4. The method of one of claims 1-3, wherein a default router list is configured in the mobile node, said default router list comprising all routers reachable by the mobile node and comprising an entry for the first router, the method further comprising the steps of :
sending from the mobile node at least one neighbor solicitation message, destined to the first router, comprising address information of the first router and address information of the mobile node,
determining whether a response of the first router to the at least one neighbor solicitation message, sent by the mobile node, is received in the mobile node,
in case no response of the first router is received in the mobile node, deleting the entry for the first router in the default router list, and
in case a response of the first router is received in the mobile node, maintaining the entry for the first router in the default router list.

5. The method of one of claims 1-4, wherein a default router list is configured in the mobile node, said default router list comprising all routers reachable by the mobile node and comprising an entry for the first router, the method further comprising the step of:
upon reception of the first router advertisement message in the mobile node, inserting an entry for the second router in the default router list, and
wherein the step of configuring in the mobile node the second router, instead of the first router as the default router for the mobile node, is performed by selecting the entry for the second router in the default router list.

6. The method of one of claims 1-5, wherein the first router and the second router are connected to a network access entity, said network access entity exchanging data between an external network and the first router and the second router and comprising information on a routing assignment of the mobile node to the first router, and the method further comprises the step of:
upon reception of the neighbor solicitation message from the mobile node in the second router, notifying the network access entity, by the second router, to re-assign the routing of the mobile node to the second router, instead of to the first router.

7. The method of one of claims 1-6, wherein the step of sending from the mobile node a neighbor solicitation message, destined to the first router, is a first step of a Neighbor Unreachability Detection procedure, said Neighbor Unreachability Detection Procedure being performed for a specific router and a specific mobile node to determine, whether the specific router is reachable for the specific mobile node.

8. The method of one of claims 1-7, wherein the neighbor solicitation message from the mobile node is a first neighbor solicitation message, comprising address information of the first router and address information of the mobile node and the method further comprises the step of:
upon reception in the second router of at least a second neighbor solicitation message, comprising address information of the first router and address information of the mobile node, ignoring by the second router the at least second neighbor solicitation message.

9. A router for exchanging data with a mobile node, the router (104)being connected to a first network area (105) and the mobile node moving from a second network area (103) to the first network area in a mobile communication system, wherein a second router (102) is connected to the second network area, the mobile node is located in the first network area, wherein the router comprises:
a receiver adapted to receive a first neighbor solicitation message, destined to the second router, comprising address information of the second router and of the mobile node,
a processor adapted to process the first neighbor solicitation message and further adapted to generate a first router advertisement message in response to the first neighbor solicitation message, the first router advertisement message comprising address information of the router,
the processor further adapted to generate a second router advertisement message in response to the first neighbor solicitation message, the second router advertisement message including address information of the second router and information on an expiration of the second router, and
a transmitter adapted to transmit the first and the second router advertisement message to the mobile node.

10. The router of claim 9, wherein the receiver is further adapted to receive, after the reception of the first neighbor solicitation message, comprising address information of the second router and of the mobile node, a plurality of neighbor solicitation messages, destined to the second router, comprising address information of the second router and of the mobile node, and
the processor is further adapted to ignore the plurality of neighbor solicitation messages, comprising address information of the mobile node and of the second router.

11. The router of one of claims 9-10, wherein the router is connected to a network access entity, the network access entity exchanging data between the router and an external network and wherein the network access entity comprises information on a routing assignment of the mobile node to the second router,
the processor is further adapted to generate, upon the processing of the first neighbor solicitation message, a notification for the network access entity, including a routing re-assignment indication to re-assign the routing of the mobile node to the router, instead of to the second router, and
the transmitter is further adapted to transmit the notification to the network access entity.

12. The router of one of claims 9-11, wherein the processor is further adapted to determine that the mobile node is new in the first network area by utilizing the address information of the mobile node in the neighbor solicitation message,
wherein the address information of the mobile node is utilized as a IP source address of the neighbor solicitation message and is further adapted to determine a default router for the mobile node by utilizing the address information of the second router in the neighbor solicitation message, wherein the address information of the second router is utilized as a target address of the neighbor solicitation message.

13. A mobile node for communicating with a network (101) via a router, the mobile node is attached to a first network area (103), connected to a first router (102), and, wherein within the network an attachment of the mobile node changes, and the mobile node comprises:
a processor adapted to detect the change of attachment of the mobile node and the processor is further adapted to generate, upon the detection of the change of attachment, at least one neighbor solicitation message, destined to the first router, comprising address information of the first router and address information of the mobile node, and
a transmitter adapted to transmit the at least one neighbor solicitation message, destined to the first router.

14. A method for configuring a default router for a mobile node (106), the default router being a router to which outgoing data from the mobile node is to be transmitted, the mobile node moving from a first network area (103) to a second network area (105) in a mobile communication system, a first router (102) being connected to the first network area and a second router (104) being connected to the second network area, wherein upon changing an attachment of the mobile node from the first network area to the second network area, the mobile node is located in the second network area, and wherein the first router is the default router for the mobile node, the method comprises the steps of:
upon the attachment of the mobile node to the second network area, sending from the mobile node a neighbor solicitation message , destined to the first router, comprising address information of the first router and address information of the mobile node,
receiving in the second router the neighbor solicitation message from the mobile node,
transmitting a redirect message from the second router to the mobile node, comprising address information of the second router and an indication for the mobile node to utilize the second router as the router to which outgoing data from the mobile node is to be transmitted, and
upon reception of the redirect message in the mobile node , transmitting outgoing data from the mobile node to the second router instead of to the first router, the first router being configured as the default router.

15. The method of claim 14, further comprising the step of:
upon receiving in the second router the neighbor solicitation message from the mobile node, transmitting from the second router a router advertisement message to the mobile node, comprising address information of the second router.

16. The method of one of claims 14-15, wherein the redirect message is an Internet Control Message Protocol redirect message, and said Internet Control Message Protocol redirect message utilizes an IP address of the first router as a destination address and as a IP source address and further utilizes an IP address of the second router as a target address.

17. The method of one of claims 14-16, further comprising the steps of:
upon reception in the second router of the neighbor solicitation message from the mobile node,
determining, in the second router, that the mobile node is new in the second network area by utilizing the address information of the mobile node in the neighbor solicitation message, wherein the address information of the mobile node is utilized as a IP source address of the neighbor solicitation message, and
determining, by the second router, the default router for the mobile node by utilizing the address information of the first router in the neighbor solicitation message wherein the address information of the first router is utilized as a target address of the neighbor solicitation message.

18. The method of one of claims 14-17, wherein a default router list is configured in the mobile node, said default router list comprising all routers reachable by the mobile node and comprising an entry for the first router, the method further comprising the step of:
upon reception of the router advertisement message in the mobile node, inserting an entry for the second router in the default router list.

19. The method of claim 17, further comprising the steps of:
sending from the mobile node at least one neighbor solicitation message, destined to the first router, comprising address information of the first router and address information of the mobile node,
determining whether a response of the first router to the at least one neighbor solicitation message, sent by the mobile node, is received in the mobile node,
in case no response of the first router is received in the mobile node, deleting the entry for the first router in the default router list and configuring the second router instead of the first router as the default router for the mobile node, by selecting the entry for the second router from the default router list, and
in case a response of the first router is received in the mobile node, maintaining the entry for the first router in the default router list and maintaining the first router as the default router.

20. The method of one of claims 14-19, wherein the first router and the second router are connected to a network access entity, said network access entity exchanging data between an external network and the first router and the second router and comprising information on a routing assignment of the mobile node to the first router, and the method further comprises the step of:
upon reception of the neighbor solicitation message from the mobile node in the second router, notifying the network access entity, by the second router, to re-assign the routing of the mobile node to the second router, instead of to the first router.

21. The method of one of claims 14-20, wherein the step of sending from the mobile node a neighbor solicitation message, destined to the first router, is a first step of a Neighbor Unreachability Detection procedure, said Neighbor Unreachability Detection Procedure being performed by the mobile node for a specific router to determine, whether the specific router is reachable by the mobile node.

22. The method of one of claims 14-21, wherein the neighbor solicitation message from the mobile node is a first neighbor solicitation message, comprising address information of the first router and address information of the mobile node and the method further comprises the step of:
upon reception in the second router of at least a second neighbor solicitation message, comprising address information of the first router and address information of the mobile node, ignoring by the second router the at least second neighbor solicitation message.

23. A router for exchanging data with a mobile node, the router (104) being connected to a first network area (105) and the mobile node moving from a second network area (103) to the first network area in a mobile communication system, wherein a second router (102) is connected to the second network area, the mobile node is located in the first network area, wherein the router comprises:
a receiver adapted to receive a first neighbor solicitation message, destined to the second router, comprising address information of the second router and of the mobile node,
a processor adapted to process the first neighbor solicitation message and further adapted to generate a redirect message in response to the first neighbor solicitation message, the redirect message comprising address information of the router and an indication for the mobile node to utilize the router for transmitting outgoing data from the mobile node to, and
a transmitter adapted to transmit the redirect message to the mobile node.

24. The router of claim 23, wherein the processor is further adapted to generate a router advertisement message in response to the first neighbor solicitation message, the router advertisement message including address information of the router, and the transmitter is further adapted to transmit the router advertisement message to the mobile node.

25. The router of one of claims 23-24, wherein the receiver is further adapted to receive, after the reception of the first neighbor solicitation message, comprising address information of the second router and of the mobile node, a plurality of neighbor solicitation messages, comprising address information of the second router and of the mobile node, and
the processor is further adapted to ignore the plurality of neighbor solicitation messages, comprising address information of the mobile node and of the second router.

26. The router of one of claims 23-25, wherein the router is connected to a network access entity , the network access entity exchanging data between the router and an external network and wherein the network access entity comprises information on a routing assignment of the mobile node to the second router,
the processor is further adapted to generate, upon the processing of the first neighbor solicitation message, a notification for the network access entity, including a routing re-assignment indication to re-assign the routing of the mobile node to the router, instead of to the second router, and
the transmitter is further adapted to transmit the notification to the network access entity.

27. The router of one of claims 19-22, wherein the processor is further adapted to determine that the mobile node is new in the first network area by utilizing the address information of the mobile node in the neighbor solicitation message,
wherein the address information of the mobile node is utilized as a IP source address of the neighbor solicitation message, and is further adapted to determine a default router for the mobile node by utilizing the address information of the second router in the neighbor solicitation message wherein the address information of the second router is utilized as a target address of the neighbor solicitation message.

28. A method for configuring a default router for a mobile node (106), the default router being a router to which outgoing data from the mobile node is to be transmitted, the mobile node moving from a first network area (103) to a second network area (105) in a mobile communication system, a first router (102) being connected to the first network area and a second router (104) being connected to the second network area, wherein upon changing an attachment of the mobile node from the first network area to the second network area, the mobile node is located in the second network area, and wherein the first router is the default router for the mobile node, the method comprises the steps of:
upon the attachment of the mobile node to the second network area, transmitting from the mobile node a router solicitation message, comprising address information of the mobile node,
receiving in the second router the router solicitation message from the mobile node and transmitting from the second router a router advertisement message to the mobile node, comprising address information of the second router and an indication for the mobile node to utilize the second router as the default router, and
upon reception of the router advertisement message in the mobile node, configuring the second router, instead of the first router, as the default router for the mobile node.

29. The method of claim 28, wherein the indication for the mobile node in the router advertisement message to utilize the second router as the default router, is a flag.

30. The method of claim 29, wherein the router advertisement message includes as a source IP address an IP address of the second router and wherein the flag in the router advertisement message is set to one, so as to indicate that the router **characterized by** the source IP address of the router advertisement message is to be utilized as the default router.

31. The method of one of claims 28-30, wherein the router advertisement message is transmitted to the mobile note via unicast.

32. The method of one of claims 28-31, further comprising the step of:
upon reception in the second router of the router solicitation message from the mobile node, determining, in the second router, that the mobile node is new in the second network area by utilizing the address information of the mobile node in the router solicitation message, wherein the address information of the mobile node is utilized as a IP source address of the router solicitation message.

33. The method of one of claims 28-32, wherein a default router list is configured for the mobile node, said default router list comprising all reachable routers of the mobile node and comprising an entry for the first router, the method further comprising the steps of:
sending from the mobile node at least one neighbor solicitation message, destined to the first router, comprising address information of the first router and address information of the mobile node,
determining whether a response of the first router to the at least one neighbor solicitation message, sent by the mobile node, is received in the mobile node,
in case no response of the first router is received in the mobile node, deleting the entry for the first router in the default router list, and
in case a response of the first router is received in the mobile node, maintaining the entry for the first router in the default router list.

34. The method of claim 33, wherein the step of sending from the mobile node at least one neighbor solicitation message is a first step of a Neighbor Unreachability Detection procedure, said Neighbor Unreachability Detection Procedure being performed by the mobile node for a specific router, whether the specific router is reachable by the mobile node.

35. The method of one of claims 28-34, wherein a default router list is configured in the mobile node, said default router list comprising all routers reachable by the mobile node and comprising an entry for the first router, the method further comprising the step of :
upon reception of the router advertisement message in the mobile node, inserting in the default router list an entry for the second router, and
wherein the step of configuring in the mobile node the second router, instead of the first router as the default router for the mobile node, is performed by selecting the entry for the second router in the default router list.

36. The method of one of claims 28-35, wherein the first router and the second router are connected to a network access entity, said network access entity exchanging data between an external network and the first router and the second router and comprising information on a routing assignment of the mobile node to the first router, and the method further comprises the step of:
upon reception of the router solicitation message from the mobile node in the second router, notifying the network access entity, by the second router, to re-assign the routing of the mobile node to the second router, instead of to the first router.

37. A router for exchanging data with a mobile node, the router (104) being connected to a first network area (105) and the mobile node moving from a second network area (103) to the first network area in a mobile communication system, wherein a second router (102) is connected to the second network area, the mobile node is located in the first network area, wherein the router comprises:
a receiver adapted to receive a router solicitation message, comprising address information of the mobile node,
a processor adapted to process the router solicitation message and further adapted to generate a router advertisement message in response to the router solicitation message, the router advertisement message comprising address information of the router and an indication for the mobile node to utilize the router as a default router,
a transmitter adapted to transmit the router advertisement message to the mobile node.

38. The router of claim 37, wherein the router is connected to a network access entity, the network access entity exchanging data between the router and an external network and wherein the network access entity comprises information on a routing assignment of the mobile node to the second router,
the processor is further adapted to generate, upon the processing of the router solicitation message, a notification for the network access entity, including a routing re-assignment indication to re-assign the routing of the mobile node to the router, instead of to the second router, and
the transmitter is further adapted to transmit the notification to the network access entity.

39. The router of one of claims 37-38, wherein the processor is further adapted to determine that the mobile node is new in the first network area by utilizing the address information of the mobile node in the router solicitation message, wherein the address information of the mobile node is utilized as a IP source address of the router solicitation message.

40. A mobile node for communicating with a network (101) via a router, the mobile node is attached to a first network area (103), connected to a first router (102), and, wherein within the network an attachment of the mobile node changes, and the mobile node comprises:
a processor adapted to detect the change of attachment of the mobile node and the processor is further adapted to generate, upon the detection of the change of attachment, a router solicitation message, comprising address information of the mobile node, and
a transmitter adapted to transmit the router solicitation message,
a receiver adapted to receive a router advertisement message from a second router (104), connected to a second network area (105), comprising address information of the second router and an indication to utilize the second router as a default router for the mobile node,
wherein the processor is further adapted to process the indication to utilize the second router as the default router for the mobile node and further adapted to configure the second router as the default router for the mobile node.

41. The method of claim 1 or claim 14, wherein the first router advertisement message further includes an indication for the mobile node to utilize the second router as the default router for the mobile node, the method further comprising the step of:
upon reception of the first router advertisement message in the mobile node, configuring the second router, instead of the first router, as the default router for the mobile node.

42. The router of claim 9 or claim 23, wherein the processor is further adapted to generate a router advertisement message in response to the neighbor solicitation message, the router advertisement message comprising address information of the router and an indication for the mobile node to utilize the router as a default router for the mobile node, and
the transmitter is further adapted to transmit the router advertisement message to the mobile node.

43. A mobile node according to claim 13, further comprising:
a receiver adapted to receive a router advertisement message from the second router, comprising address information of the second router and an indication to utilize the second router as a default router for the mobile node, and wherein
the processor is further adapted to process the indication to utilize the second router as the default router for the mobile node and further adapted to configure the second router as the default router for the mobile node.

44. The method of claim 28, wherein the second router has information on an assignment of the mobile node to the first router, the method further comprising the steps of:
upon reception in the second router of the router solicitation message from the mobile node, comprising address information of the mobile node, determining the router assigned to the mobile node, by utilizing the information on the assignment of the mobile node to the first router,
transmitting from the second router a second router advertisement message to the mobile node, comprising address information of the first router and information on an expiration of the first router,
and/or transmitting from the second router a redirect message to the mobile node, comprising address information of the second router and an indication for the mobile node to utilize the second router as the router to which outgoing data from the mobile node is to be transmitted,
upon reception of the redirect message in the mobile node, transmitting outgoing data from the mobile node to the second router instead of to the first router, the first router being configured as the default router, and
upon reception of the second advertisement message in the mobile node, configuring in the mobile node the second router instead of the first router as the default router for the mobile node.

45. The router of claim 37, further comprising information on an assignment of the mobile node to the second router, wherein
the processor is further adapted to determine the router assigned to the mobile node, utilizing information on an assignment of the mobile node to the second router,
the processor is further adapted to generate a second router advertisement message to the mobile node, comprising address information of the second router and information on an expiration of the second router, and/or
the processor is further adapted to generate a redirect message to the mobile node, comprising address information of the router and an indication for the mobile node to utilize the router for transmitting outgoing data from the mobile node to, and
the transmitter is further adapted to transmit the second router advertisement message and/or the redirect message to the mobile node.

46. The method of claim 44, wherein the information on an assignment of the mobile node to the first router is in a neighboring mobile node list configured for the second router, the neighboring mobile node list comprising information in mobile nodes, registered to neighbouring routers of the second router.

47. The method of claim 44, wherein the information on an assignment of the mobile node to the first router, is received in the second router in a neighbor solicitation message, comprising address information of the first router and address information of the mobile node.

48. The method of claim 44, wherein the information on an assignment of the mobile node to the first router is requested in a network access entity, the network access entity being connected to the second router and maintaining information on assignments between mobile nodes and routers, connected to the mobile nodes.

49. A mobile communication system for configuring a default router for a mobile node, further comprising at least a router according to one of claims 9-12, 23-27, 37-39, 42 and 45,
and further comprising at least a mobile node according to one of claims 13, 40 and 43.

50. A method for configuring a default router for a mobile node (106), the default router being a router to which outgoing data from the mobile node is to be transmitted, the mobile node moving from a first network area (103) to a second network area (105), a first router (102) being connected to the first network area and a second router (104) being connected to the second network area, wherein the mobile node is located in the second network area, and wherein the first router is the default router for the mobile node, the method comprises the steps of:
upon an attachment of the mobile node to the second network area, sending from the mobile node a first message,
receiving in the second router the first message from the mobile node and transmitting from the second router a second message to the mobile node,
transmitting from the second router a third message to the mobile node, comprising information on an expiration of the first router, and
configuring in the mobile node the second router, instead of the first router as the default router for the mobile node.

51. A method for configuring a default router for a mobile node (106), the default router being a router to which outgoing data from the mobile node is to be transmitted, the mobile node moving from a first network area (103) to a second network area (105), a first router (102) being connected to the first network area and a second router (104) being connected to the second network area, wherein the mobile node is located in the second network area, and wherein the first router is the default router for the mobile node, the method comprises the steps of:
upon an attachment of the mobile node to the second network area, sending from the mobile node a first message,
receiving in the second router the first message from the mobile node,
transmitting from the second router a second message to the mobile node, comprising an indication for the mobile node to utilize the second router, instead of the first router as the router to which outgoing data from the mobile node is to be transmitted,
transmitting outgoing data from the mobile node to the second router.

52. A method for configuring a default router for a mobile node (106), the default router being a router to which outgoing data from the mobile node is to be transmitted, the mobile node moving from a first network area (103) to a second network area (105), a first router (102) being connected to the first network area and a second router (104) being connected to the second network area, wherein the mobile node is located in the second network area, and wherein the first router is the default router for the mobile node, the method comprises the steps of:
upon an attachment of the mobile node to the second network area, sending from the mobile node a first message,
receiving in the second router the first message from the mobile node,
transmitting from the second router a second message to the mobile node, comprising an indication for the mobile node to utilize the second router as the default router,
configuring the second router, instead of the first router as the default router for the mobile node.
